# EUROPÄISCHE PATENTANMELDUNG

(11) **EP 1 037 079 A2**
(43) Veröffentlichungstag der Anmeldung: **20.09.2000**
(21) Anmeldenummer: 00104275.3
(22) Anmeldetag: 01.03.2000
(51) Int. Cl.: G02B 6/42

(54) **Steckverbinder für Lichtleiter**

(30) Priorität: 15.03.1999 DE 19911396
(71) Anmelder: Delphi Technologies, Inc., Troy, MI 48007 (US)
(72) Erfinder: Halbach, Paul Gerhard J., 42369 Wuppertal (DE); Haack, Albrecht, 42369 Wuppertal (DE)
(74) Vertreter: Manitz, Finsterwald & Partner

(57) **Zusammenfassung**

Ein Steckverbinder für Lichtleiter umfaßt ein Steckteil (16) und ein Aufnahmeteil (18), wobei das Steckteil (16) mit wenigstens einem optischen Terminal oder einer optischen Ferrule (10) versehen ist, die bei zusammengesteckten Verbinderteilen (16, 18) einem in das Aufnahmeteil (18) einsetzbaren Gegenelement (12) wie insbesondere einem elektrooptischen Modul oder einer weiteren, in das Aufnahmeteil (18) eingeführten optischen Ferrule gegenüberliegt. Es ist wenigstens ein in dem Aufnahmeteil (12) fixierbares Ausrichtelement (14) vorgesehen, das bei zusammengesteckten Verbinderteilen (16, 18) in Steck- oder Axialrichtung (x) zwischen einem jeweiligen optischen Verbindungselement (10) des Steckteils (16) und einem jeweiligen Gegenelement (12) angeordnet ist, wobei das Ausrichtelement (14) eine durchgehende axiale Ausrichtöffnung (20) besitzt, in die ein axialer Ansatz (22) der optischen Ferrule (10) einsteckbar ist, sowie an seinen beiden Enden quer zur Axialrichtung (x) verlaufende Stirnflächen (24, 26) aufweist, die mit einer an der optischen Ferrule (10) bzw. mit einer an dem Gegenelement (12) vorgesehenen jeweils quer zur Axialrichtung (x) verlaufenden Anschlagsfläche (28, 30) zusammenwirken und gegen die die optische Ferrule (10) und das Gegenelement (12) anpreßbar sind.

## Beschreibung

Die Erfindung betrifft einen Steckverbinder für Lichtleiter, mit einem Steckteil und einem Aufnahmeteil, wobei das Steckteil mit wenigstens einem optischen Terminal oder einer optischen Ferrule versehen ist, das bei zusammengesteckten Verbinderteilen einem in das Aufnahmeteil einsetzbaren Gegenelement wie insbesondere einem elektrooptischen Modul oder einer weiteren, in das Aufnahmeteil eingeführten optischen Ferrule gegenüberliegt. Unter einem elektrooptischen Modul ist ein beliebig ausgeführtes Modul zu verstehen, in dem optische Signale in elektrische Signale und/oder elektrische Signale in optische Signale umgewandelt werden. In das jeweilige Aufnahmeteil können ein oder auch mehrere solche elektrooptische Module eingesetzt sein.

Die Funktionsfähigkeit von Lichtleiter-Steckverbindern der eingangs genannten Art ist von der gegenseitigen Ausrichtung der optischen Komponenten abhängig. Eine fehlerhafte Ausrichtung dieser Komponenten kann zu größeren Lichtverlusten führen und demzufolge die Funktionsfähigkeit des gesamten Lichtleitersystems beeinträchtigen. Die Fehlausrichtung ist in allen Richtungen in etwa gleich kritisch.

Ziel der Erfindung ist es, einen Steckverbinder eingangs genannten Art zu schaffen, bei dem der sich bezüglich der optischen Funktion ergebende Toleranzbereich auf einfache und zuverlässige Weise möglichst klein gehalten ist. Dabei soll insbesondere der sich in Axialrichtung ergebende Toleranzbereich so Mein wie möglich gehalten werden.

Diese Aufgabe wird nach der Erfindung dadurch gelöst, daß wenigstens ein in dem Aufnahmeteil fixierbares Ausrichtelement vorgesehen ist, das bei zusammengesteckten Verbinderteilen in Steck- oder Axialrichtung zwischen einer jeweiligen optischen Ferrule des Steckteils und einem jeweiligen Gegenelement angeordnet ist, wobei das Austichtelement eine durchgehende axiale Ausrichtöffnung besitzt, in die ein axialer Ansatz der optischen Ferrule einsteckbar ist, sowie an seinen beiden Enden quer zur Axialrichtung verlaufende Stirnflächen aufweist, die mit einer an der optischen Ferrule bzw. mit einer an dem Gegenelement vorgesehenen jeweils quer zur Axialrichtung verlaufenden Anschlagsfläche zusammenwirken und gegen die die optische Ferrule und das Gegenelement anpreßbar sind.

Aufgrund dieser Ausbildung wird der sich bezüglich der optischen Funktion ergebende Toleranzbereich auf ein Minimum reduziert, so daß nach einem jeweiligen Zusammenstecken der Verbinderteile stets eine optimale optische Funktion gewährleistet ist. Insbesondere der sich bezüglich der optischen Funktion in Axialrichtung ergebende Toleranzbereich wird deutlich verringert. Dies gilt unter der Voraussetzung, daß die beiden optischen Elemente tatsächlich auch an den Stirnflächen anliegen. Bei dem in aller Regel geforderten elektrooptischen Modul kann man davon ausgehen, wobei auf der Seite der Ferrule jedoch ein entsprechender Anpreßdruck erforderlich ist. Der betreffende Toleranzbereich ist zumindest im wesentlichen nur noch abhängig von der Einhaltung eines vorgebbaren definierten Abstandes zwischen den beiden Stirnflächen des Ausrichtelements, der Einhaltung eines vorgebbaren definierten Abstands zwischen der mit einer Stirnfläche des Ausrichtelements zusammenwirkenden Anschlagsfläche eines jeweiligen optischen Terminals oder einer jeweiligen Ferrule und dem benachbarten Ende des betreffenden Lichtleiters, und, im Fall der Verwendung eines oder mehrerer elektrooptischer Module, der bezüglich der Anschlagsfläche eines jeweiligen Moduls bemessenen Höhe eines diesem Modul zugeordneten optischen Ausgangs. Bei der Endbearbeitung des Lichtleiters kann somit die Anschlagsfläche der optischen Ferrule als Bezugsfläche herangezogen werden. Bei der Positionierung eines einem elektrooptischen Modul zugeordneten optischen Ausgangs kann die mit einer Stirnfläche des Ausrichtelements zusammenwirkende Anschlagsfläche des elektrooptischen Moduls als Bezugsfläche herangezogen werden. Darüber hinaus erfolgt über das vorzugsweise innerhalb des Aufnahmeteils angeordnete Ausrichtelement auch eine Ausrichtung in einer quer zur Axialrichtung verlaufenden Ebene. Durch das Ausrichtelement wird somit insgesamt eine optimale Ausrichtung in allen drei Achsen erreicht und aufrechterhalten. Der sich bezüglich des Steckteils und des Aufnahmeteils ergebende Toleranzbereich kann durch die jeweiligen Anpreßmittel ausgeglichen werden, durch die die optische Ferrule und das Gegenelement gegen die Stirnflächen des Ausrichtelements angepreßt werden. Die Anpreßmittel können grundsätzlich von beliebiger Art sein. So sind beispielsweise federbelastete optische Ferrules denkbar. Alternativ oder zusätzlich sind beispielsweise auch die beiden Verbinderteile miteinander koppelnde Verriegelungssysteme verwendbar, die gleichzeitig für eine Art Toleranzausgleich sorgen, indem sie die relativ zum Verbindergehäuse verlagerbaren optischen Komponenten gegen die Stirnflächen des Ausrichtelements pressen. Durch diese Anpreßmittel werden die optischen Komponenten, d.h. insbesondere die z.B. zwingenartigen optischen Ferrules und beispielsweise die elektrooptischen Module, schließlich in einer definierten Endposition gehalten. Der sich insgesamt ergebende Toleranzbereich wird somit in einen sich bezüglich der optischen Komponenten und einen sich bezüglich des Steckteils und des Aufnahmeteils des Steckverbinders ergebenden Toleranzbereich unterteilt. Die durchgehende axiale Ausrichtöffnung kann auch abgestuft sein. Wesentlich ist, daß sie mit geringen radialen und axialen Toleranzen herstellbar ist. Dies ist auch mit abgestuften zylindrischen Bohrungen möglich.

Ist als Gegenelement ein elektrooptisches Modul vorgesehen, so ist dieses vorzugsweise mit wenigstens einer Steckaufnahme versehen, in die das eine Ende eines Ausrichtelements einsteckbar ist, wobei die Außenumfangsfläche dieses Endes zumindest im wesentlichen komplementär zur Innenumfangsfläche der Steckaufnahme ist. In diesem Fall ist die quer verlaufende Anschlagsfläche des elektrooptischen Moduls vorteilhafterweise durch eine Innenwand der Steckaufnahme gebildet.

Bei einer zweckmäßigen praktischen Ausführungsform ist die durch die Innenwand der Steckaufnahme gebildete Anschlagsfläche ringförmig ausgeführt und in dem Bereich innerhalb der ringförmigen Anschlagsfläche ein dem optoelektronischen Modul zugeordneter optischer Ausgang angeordnet, die dem in das Ausrichtelement eingesteckten axialen Ansatz der dem Steckteil zugeordneten optischen Ferrule gegenüberliegt. In diesem Fall kann der optische Ausgang bezüglich der Anschlagsfläche vorstehen und bei an der Anschlagsfläche anliegendem Ausrichtelement in dieses hineinragen.

Die Innenumfangsfläche der Steckaufnahme kann beispielsweise kreiszylindrisch ausgeführt sein, wobei die Außenumfangsfläche des in die Steckaufnahme einsteckbaren Endes des Ausrichtelements dazu zumindest im wesentlichen komplementär ist.

Die Innenumfangsfläche der Steckaufnahme kann beispielsweise aber auch einen leicht konischen Verlauf mit in Axialrichtung vom Steckteil weg kleiner werdendem Innenquerschnitt besitzen, wobei auch in diesem Fall die Außenumfangsfläche des in die Steckaufnahme einsteckbaren Endes des Ausrichtelements dazu zumindest im Wesentlichen wieder komplementär ist.

In bestimmten Fällen ist es zweckmäßig, wenn wenigstens zwei elektrooptische Module mit jeweils wenigstens einer Steckaufnahme in das Aufnahmeteil einsetzbar sind.

In bestimmten Fällen kann es auch von Vorteil sein, wenn wenigstens ein elektrooptisches Modul vorgesehen ist, das wenigstens zwei Steckaufnahmen für ein jeweiliges Ausrichtelement umfaßt.

Ist auch das Gegenelement durch eine optische Ferrule gebildet, so weist vorzugsweise auch diese optische Ferrule einen in das Ausrichtelement einsteckbaren axialen Ansatz sowie eine quer zur Axialrichtung verlaufende Anschlagsfläche auf, die mit der zugewandten Stirnfläche des Ausrichtelements zusammenwirkt. In diesem Fall kann das Aufnahrnteil somit ein der gegenseitigen Verbindung von optischen Kabeln oder Lichtleitern dienendes In-line-Gehäuse umfassen, in das ein Einsteckteil einsteckbar ist. Ein solches In-line-Gehäuse kann wie bei Stecksystemen üblich aus einem Stecker und einer Kupplung gebildet sein. Der Stecker kann derselbe sein wie beim Header, jedoch enthält der In-line-Stecker (Kupplung) die Ausrichtöffnung, in der die beiden Ferrules zueinander ausgerichtet sind.

Bei einer zweckmäßigen praktischen Ausführungsform des erfindungsgemäßen Steckverbinders ist wenigstens eine optische Ferrule vorgesehen, dessen axialer Ansatz eine kreiszylindrische Außenumfangsfläche besitzt, wobei die Innenumfangsfläche des den axialen Ansatz aufnehmenden Endes des Ausrichtelements dazu zumindest im wesentlichen komplementär ist.

Gemäß einer weiteren vorteilhaften Ausführungsform kann wenigstens eine optische Ferrule vorgesehen sein, deren axialer Ansatz einen leicht konischen Verlauf mit in Axialrichtung vom Steckteil weg Meiner werdendem Innenquerschnitt besitzt. Auch in diesem Fall ist die Innenumfangsfläche des den axialen Ansatz aufnehmenden Endes des Ausrichtelements dazu zumindest im wesenflichen wieder komplementär.

Vorzugsweise ist wenigstens eine optische Ferrule vorgesehen, deren axialer Ansatz am freien Ende mit einer Abschrägung versehen ist. Damit ist das Einführen in das Ausrichtelement erleichtert. Zudem ist als weiterer Endbearbeitungsschritt eine Heißplattierung möglich.

Das Ausrichtelement kann allgemein rohrstückartig ausgeführt sein.

Bei einer zweckmäßigen praktischen Ausführungsform ist das Ausrichtelement mit einem äußeren Ringflansch versehen, über den es bezüglich des Aufnahmeteils axial fixierbar ist. Ein solcher Ringflansch kann in Axialrichtung insbesondere zwischen den beiden Stirnflächen des Ausrichtelements angeordnet sein.

Das Ausrichtelement ist vorzugsweise insgesamt starr ausgeführt.

Die Erfindung wird im folgenden anhand eines Ausführungsbeispiels unter Bezugnahme auf die Zeichnung näher erläutert; in dieser zeigen:
- Fig. 1: eine schematische, teilweise geschnittene Darstellung eines optischen Terminals oder einer optischen Ferrule und eines elektrooptischen Moduls mit dazwischen angeordnetem Ausrichtelement,
- Fig. 2: eine perspektivische Darstellung der in Fig. 1 gezeigten Anordnung,
- Fig. 3: eine Vorderansicht eines mit zwei Ausrichtelementen versehenen Aufnahmeteils und
- Figur 4: Beispiele für erfindungsgemäße Ausrichtöffnungen.

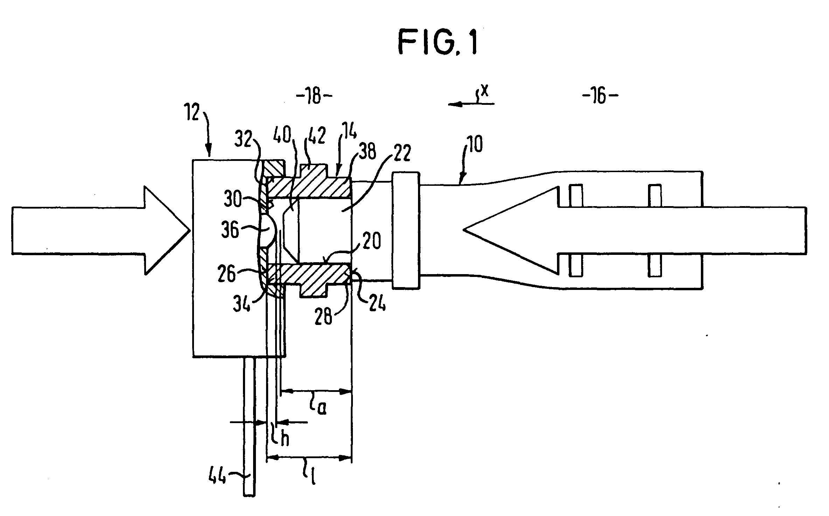

Fig. 1 zeigt in schematischer, teilweise geschnittener Darstellung ein optisches Terminal oder eine optische Ferrule 10 und ein elektrooptisches Modul 12 mit einem dazwischen angeordneten starren Ausrichtelement 14. Unter einem elektrooptischen Modul ist hierbei ein beliebig ausgeführtes Modul zu verstehen, in dem optische Signale in elektrische Signale und/oder elektrische Signale in optische Signale umgewandelt werden.

Die optische Ferrule 10 kann insbesondere einem Steckteil 16 und das elektrooptische Modul 12 insbesondere einem Aufnahmeteil 18 eines Steckverbinders für faseroptische Lichtleiter zugeordnet sein. In der Fig. 1 sind lediglich die optische Ferrule 10, das elektrooptische Modul 12 und das starre Ausrichtelement 14 dieses Steckverbinders dargestellt. Mit dem Zusammenstecken der Verbinderteile 16, 18 werden die optische Ferrule 10 und das dieser schließlich als Gegenelement gegenüberliegende elektrooptische Modul 12 über das Ausrichtelement 14 gegenseitig ausgerichtet.

Das in dem Aufnahmeteil 18 fixierbare Ausrichtelement 14 ist bei zusammengesteckten Verbinderteilen 16, 18 in Steck- oder Axialrichtung x zwischen der optischen Ferrule 10 des Steckteils 16 und dem in das Aufnahmeteil 18 eingesetzten elektrooptischen Modul 12 angeordnet. Das Ausrichtelement 14 besitzt eine durchgehende axiale Ausrichtöffnung 20, in die ein axialer Ansatz 22 der optischen Ferrule 10 einsteckbar ist. An seinen beiden Enden weist das Ausrichtelement 14 quer zur Axialrichtung x verlaufende Stirnflächen 24, 26 auf, die mit einer an der optischen Ferrule 10 bzw. mit einer an dem elektrooptischen Modul 12 vorgesehenen, ebenfalls jeweils quer zur Axialrichtung x verlaufenden Anschlagsfläche 28, 30 zusammenwirken. Wie anhand der Fig. 1 zu erkennen ist, erstrekken sich die beiden Stirnflächen 24, 26 des Ausrichtelements 14 sowie die beiden Anschlagsflächen 28, 30 der optischen Ferrule 10 bzw. des elektrooptischen Moduls 12 jeweils senkrecht zur Axialrichtung x. Die optische Ferrule 10 ist mit seiner Anschlagsfläche 28 gegen die Stirnfläche 24 und das elektrooptische Modul 12 mit seiner Anschlagsfläche 30 gegen die Stirnfläche 26 des Ausrichtelements 14 anpreßbar. Die betreffenden Anpreßmittel können in beliebiger Weise ausgeführt sein.

Wie anhand der Fig. 1 zu erkennen ist, ist das elektrooptische Modul 12 mit einer Steckaufnahme 32 versehen, in die das eine Ende 34 des Ausrichtelements 14 einsteckbar ist. Dabei ist die Außenumfangsfläche des Endes 34 des Ausrichtelements 14 zumindest im wesentlichen komplementär zur Innenumfangsfläche der Steckaufnahme 32. Die quer verlaufende Anschlagsfläche 30 des elektrooptischen Moduls 12 ist durch den Boden, d.h. eine entsprechende Innenwand der Steckaufnahme 32 gebildet.

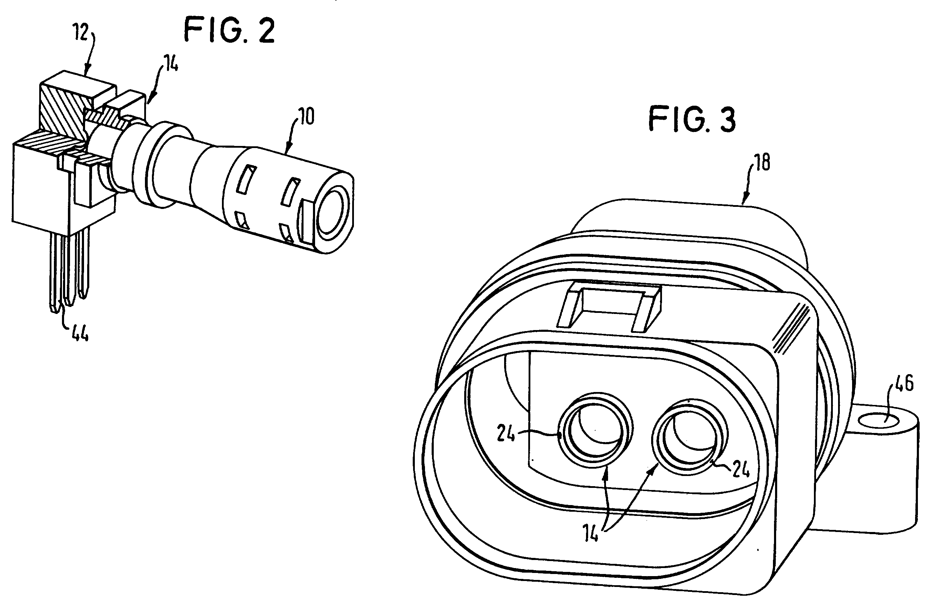

Beim vorliegenden Ausführungsbeispiel sind zwei in das Aufnahmeteil 18 eingesetzte elektrooptische Module 12 mit jeweils einer für ein jeweiliges Ausrichtelement 14 bestimmten Steckaufnahme 32 vorgesehen (vgl. auch die Figuren 2 und 3). Es kann jedoch beispielsweise auch wenigstens ein elektrooptisches Modul vorgesehen sein, das wenigstens zwei Steckaufnahmen für ein jeweiliges Ausrichtelement umfaßt.

Die durch eine Innenwand einer jeweiligen Steckaufnahme 32 gebildete Anschlagsfläche 30 ist im vorliegenden Fall ringförmig. Der optische Ausgang 36 des elektrooptischen Moduls 12, der beispielsweise eine Linse umfassen kann, die jedoch nicht zwingend ist, ist im mittleren Bereich innerhalb dieser ringförmigen Anschlagsfläche 30 vorgesehen. Dieser optische Ausgang 36 liegt schließlich dem in das Ausrichtelement 14 eingesteckten axialen Ansatz 22 der betreffenden optischen Ferrule 10 gegenüber. Beim vorliegenden Ausführungsbeispiel steht der optische Ausgang 36 bezüglich der Anschlagsfläche 30 vor, so daß er bei an dieser Anschlagsfläche 30 anliegendem Ausrichtelement 14 in dieses hineinragt. Der optische Ausgang 36 liegt somit in definiertem Abstand dem Ende des der optischen Ferrule 10 zugeordneten Lichtleiters gegenüber, nachdem dieses einen definierten Abstand von der Anschlagsfläche 28 der optischen Ferrule 10 aufweist und mit der Anlage dieser Anschlagsfläche 28 an der Stirnfläche 24 des Ausrichtelements 14 innerhalb des Ausrichtelements 14 entsprechend positioniert ist.

Die Innenumfangsfläche der Steckaufnahme 32 kann beispielsweise kreiszylindrisch ausgeführt sein, wobei die Außenumfängsfläche des in die Steckaufnahme 32 einsteckbaren Endes 34 des Ausrichtelements 14 dazu vorzugsweise zumindest im wesentlichen komplementär ist.

Die Innenumfangsfläche der Steckaufnahme 32 kann beispielsweise aber auch einen leicht konischen Verlauf mit Axialrichtung x vom Steckteil 16 weg kleiner werdendem Innenquerschnitt besitzen. Auch in diesem Fall ist die Außenumfangsfläche des in die Steckaufnahme 32 einsteckbaren Endes 34 des Ausrichtelements 14 zu dieser Innenumfangsfläche der Steckaufnahme 32 vorzugsweise zumindest im wesentlichen wieder komplementär.

Anstatt durch ein elektrooptisches Modul 12 kann das Gegenelement auch durch ein optisches Ferrule gebildet sein, das beispielsweise den gleichen Aufbau wie die in der Fig. 1 dargestellte optische Ferrule 16 besitzen kann. Auch die als Gegenelement 12 vorgesehene optische Ferrule kann somit einen in das Ausrichtelement 14 einsteckbaren axialen Ansatz 22 sowie eine quer zur Axialrichtung x verlaufende Anschlagsfläche 28 aufweisen, die dann mit der zugewandten Stirnfläche 26 des Ausrichtelements 14 zusammenwirkt. In diesem Fall kann das Aufnahmeteil 18 somit ein der gegenseitigen Verbindung von optischen Kabeln dienendes In-line-Gehäuse umfassen, an dessen beiden Enden jeweils ein Einsteckteil 16 einsteckbar ist.

Der axiale Ansatz 22 einer jeweiligen optischen Ferrule 10 kann beispielsweise eine kreiszylindrische Außenumfangsfläche besitzen, wobei die Innenumfangsfläche des den axialen Ansatz 22 aufnehmenden Endes oder Abschnitts 38 des Ausrichtelements 14 dazu zumindest im wesentlichen vorzugsweise komplementär ist. Der axiale Ansatz 22 kann beispielsweise aber auch einen leicht konischen Verlauf mit in Axialrichtung x vom Steckteil 16 weg Meiner werdenden Innenquerschnitt besitzen. Auch in diesem Fall ist die Innenumfangsfläche des den axialen Ansatz 22 aufnehmenden Abschnitts 38 des Ausrichtelements 14 dazu zumindest im wesenflichen vorzugsweise wieder komplementär.

Wie anhand der Fig. 1 zu erkennen ist, ist das freie Ende des axialen Ansatzes 22 der optischen Ferrule 10 mit einer Abschrägung 40 versehen.

Im vorliegenden Fall ist das Ausrichtelement 14 allgemein rohrstückartig ausgeführt. Es ist mit einem äußeren, zwischen den beiden Stirnflächen 24, 26 angeordneten Ringflansch 42 versehen, über den es bezüglich des Aufnahmeteils 18 axial fixierbar ist.

Die elektrooptischen Module 12 können jeweils in einer in das Aufnahmeteil 18 einsetzbaren Halterung aus Metall aufgenommen sein, durch die gleichzeitig eine EMV-oder EMI-Abschirmung bewirkt wird. Dabei ist unter "EMV" die Elektromagnetische Verträglichkeit und unter "EMI" der englische Fachbegriff "electro magnetic interference" zu verstehen. Die elektrooptischen Module 12 und die die EMV-Abschirmung bewirkenden Halter können beispielsweise von der Rückseite her in das Aufnahmeteil 18 einsetzbar sein. Die elektrooptischen Module 12 können beispielsweise durch im Halter vorgesehene Federelemente in der gewünschten Lage gehalten werden. Es können Mittel vorgesehen sein, um den Halter und die elektrooptischen Module 12 mit dem Aufnahmeteil 18 zu verriegeln. Die betreffenden Verriegelungsmittel können eine leichte Axialbewegung des Halters herbeiführen, um diesen gegen eine Innenwand einer entsprechenden Aufnahme zu bewegen. Die innerhalb des Halters vorgesehenen Federmittel bewegen die elektrooptischen Module 12 gegen die Stirnfläche 32 des Ausrichtelement 14 und halten sie damit in der gewünschten Position.

Die zwingenartigen optischen Ferrules 10 bewegen sich beim Zusammenstecken der beiden Verbinderteile 16, 18 jeweils gegen die Stirnfläche 24 des betreffenden Ausrichtelements 14. Die betreffenden Anpreßmittel können von beliebiger Art sein. So können diese beispielsweise Federmittel oder Toleranzausgleichsmittel umfassen, durch die die jeweilige optische Ferrule 10 gegen die Stirnfläche 24 gepreßt wird, wenn die beiden Verbinderteile 16, 18 miteinander verriegelt werden.

Wie bereits erwähnt kann das Aufnahmeteil 18 sowohl als Header und hierbei z.B. als Transceiver, womit ein aktiver Header bezeichnet wird, der Signale sowohl empfangen als auch senden kann, oder als In-line-Verbinder vorgesehen sein.

Nachdem die optische Ferrule 10 über die Anschlagsfläche 28 an der Stirnfläche 24 des im Aufnahmeteil 18 fixierten Ausrichtelements 14 anliegt, werden von der optischen Ferrule 10 herrührende axiale Kräfte über das Ausrichtelement 14 in das Gehäuse des Steckverbinders eingeleitet.

Dasselbe gilt auch für quer zur Axialrichtung x verlaufende Kräfte. Diese Kräfte belasten somit nicht das elektrooptische Modul 12. Entsprechend genügen geringere Kräfte, um das elektrooptische Modul 12 gegen das Ausrichtelement 14 zu halten. Ein Abbiegen von dem elektrooptischen Modul 12 zugeordneten Stiften 44 (vgl. auch Fig. 2) wird damit vermieden.

Die Endbearbeitung des der optischen Ferrule 10 zugeordneten Lichtleiters sowie die Positionierung der optischen Ferrule 10 innerhalb des Steckverbinders sind auf ein und dieselbe Anschlagsfläche 28 der optischen Ferrule 10 bezogen, die beim vorliegenden Ausführungsbeispiel mit der Stirnfläche 24 des Ausrichtelements 14 zusammenwirkt. Die in Einsteckrichtung gemessene Höhe h des optischen Ausgangs 36 sowie deren Position innerhalb des Aufnahmeteils 18 sind auf ein- und dieselbe Anschlagsfläche 30 des elektrooptischen Moduls 12 bezogen.

Die Gesamtzahl der die optische Funktion betreffenden Abmessungen ist auf drei Kontrollabmessungen begrenzt, und zwar auf die Länge 1 des Ausrichtelements 14, den Abstand a zwischen der Anschlagsfläche 28 der optischen Ferrule 10 und der einer Endbehandlung unterzogenen Stirnfläche des betreffenden Lichtleiters sowie die bezüglich der Anschlagsfläche 30 des elektrooptischen Moduls 12 gemessene Höhe h des optischen Ausgangs 36. Die Anschlagsfläche 28 der optischen Ferrule 10 dient als Bezugsfläche für die Endbehandlung des Lichtleiters sowie für die Positionierung der optischen Ferrule 10. Infolge des starren Aufbaus des Ausrichtelements 14 werden alle insbesondere vom Steckteil 16 herrührenden Kräfte kompensiert, wodurch ein Verbiegen der dem elektrooptischen Modul 12 zugeordneten Stifte 44 vermieden wird. Damit ist auch eine Beeinträchtigung der betreffenden Lötstellen ausgeschlossen. Mit dem Ausrichtelement 14 wird eine festgelegte Positionierung des betreffenden elektrooptischen Moduls 12 erreicht. Mit dem Ausrichtelement 14 wird auch die Einsteckbewegung der optischen Ferrule 10 in das Aufnahmeteil 18 begrenzt, so daß ein Berühren des optischen Ausgangs 36 ausgeschlossen ist. Da das elektrooptische Modul 12 von äußeren Kräften freigehalten ist, ist auch eine SMD-Montage möglich. Nach einer endgültigen Montage kann das elektrooptische Modul 12 nicht mehr verlorengehen.

Fig. 2 zeigt eine perspektivische Darstellung der Anordnung gemäß Fig. 1. Einander entsprechende Teile sind mit gleichen Bezugszeichen versehen.

Fig. 3 zeigt eine Vorderansicht des mit zwei Ausrichtelementen 14 versehenen Aufnahmeteils 18. In dieser Fig. 3 sind die mit den Anschlagsflächen 28 der betreffenden optischen Ferrules 10 zusammenwirkenden Stirnflächen 24 der Ausrichtelemente 14 zu erkennen. Das Aufnahmeteil 18 kann beispielsweise an einer Leiterplatte montiert werden, wozu entsprechende Befestigungslöcher 46 vorgesehen sind, von denen in der Fig. 3 lediglich eines zu erkennen ist.

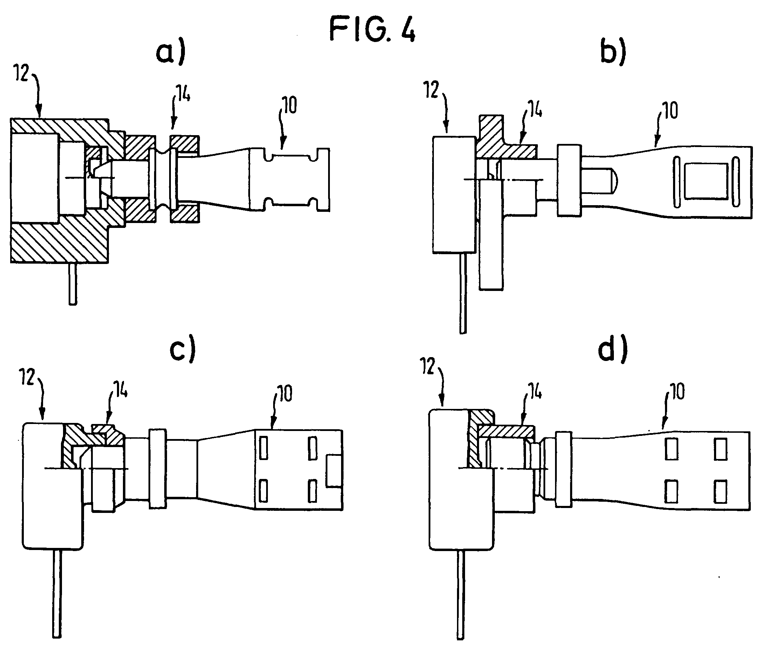

Die durchgehende axiale Ausrichtöffnung 20 des Ausrichtelements 14 kann z.B. auch abgestuft sein. Wesentlich ist, daß sie mit geringen radialen und axialen Toleranzen herstellbar ist. Dies ist auch mit abgestuften zylindrischen Bohrungen möglich. In der Figur 4 sind verschiedene Beispiele für solche Ausrichtöffnungen dargestellt.

### Bezugszeichenliste

- 10: optisches Terminal oder optisches Ferrule
- 12: Gegenelement, elektrooptisches Modul
- 14: starres Ausrichtelement
- 16: Steckteil
- 18: Aufnahmeteil
- 20: axiale Ausrichtöffnung
- 22: axialer Ansatz
- 24: Stirnfläche
- 26: Stirnfläche
- 28: Anschlagsfläche
- 30: Anschlagsfläche
- 32: Steckaufnahme
- 34: Ende
- 36: optischer Ausgang
- 38: Ende, Abschnitt
- 40: Abschrägung
- 42: Ringflansch
- 44: Stifte
- 46: Befestigungsloch
- a: Abstand zwischen dem Ende des Lichtleiters und der Anschlagsfläche der optischen Ferrule
- h: Höhe des optischen Ausgangs
- l: Länge des Ausrichtelements
- x: Steckrichtung, Axialrichtung

## Patentansprüche

1. Steckverbinder für Lichtleiter, mit einem Steckteil (16) und einem Aufnahmeteil (18), wobei das Steckteil (16) mit wenigstens einem optischen Terminal oder einer optischen Ferrule (10) versehen ist, die bei zusammengesteckten Verbinderteilen (16, 18) einem in das Aufnahmeteil (18) einsetzbaren Gegenelement (12) wie insbesondere einem elektrooptischen Modul oder einer weiteren, in das Aufnahmeteil (18) eingeführten optischen Ferrule gegenüberliegt,
dadurch **gekennzeichnet,**
daß wenigstens ein in dem Aufnahmeteil (12) fixierbares Ausrichtelement (14) vorgesehen ist, das bei zusammengesteckten Verbinderteilen (16, 18) in Steck- oder Axialrichtung (x) zwischen einer jeweiligen optischen Ferrule (10) des Steckteils (16) und einem jeweiligen Gegenelement (12) angeordnet ist, wobei das Ausrichtelement (14) eine durchgehende axiale Ausrichtöffnung (20) besitzt, in die ein axialer Ansatz (22) der optischen Ferrule (10) einsteckbar ist, sowie an seinen beiden Enden quer zur Axisirichtung (x) verlaufende Stirnflächen (24, 26) aufweist, die mit einer an der optischen Ferrule (10) bzw. mit einer an dem Gegenelement (12) vorgesehenen jeweils quer zur Axialrichtung (x) verlaufenden Anschlagsfläche (28, 30) zusammenwirken und gegen die die optische Ferrule (10) und das Gegenelement (12) anpreßbar sind.

2. Steckverbinder nach Anspruch 1,
dadurch **gekennzeichnet,**
daß das Gegenelement durch ein elektrooptisches Modul (12) gebildet ist, das mit wenigstens einer Steckaufnahme (32) versehen ist, in die das eine Ende (34) eines Ausrichtelements (14) einsteckbar ist, dessen Außenumfangsfläche zumindest im wesentlichen komplementär zur Innenumfangsfläche der Steckaufnahme (32) ist.

3. Steckverbinder nach Anspruch 2,
dadurch **gekennzeichnet,**
daß die quer verlaufende Anschlagsfläche (30) des elektrooptischen Moduls (12) durch eine Innenwand der Steckaufnahme (32) gebildet ist.

4. Steckverbinder Anspruch 2 oder 3,
dadurch **gekennzeichnet ,**
daß die durch die Innenwand der Steckaufnahme (32) gebildete Anschlagsfläche (30) ringförmig ausgeführt ist und daß in dem Bereich innerhalb der ringförmigen Anschlagsfläche (30) eine dem elektrooptischen Modul (12) zugeordneter optischer Ausgang (36) angeordnet ist, der dem in das Ausrichtelement (14) eingesteckten axialen Ansatz (22) der dem Steckteil (16) zugeordneten optischen Ferrule (10) gegenüberliegt.

5. Steckverbinder nach Anspruch 4,
dadurch **gekennzeichnet,**
daß der optische Ausgang (36) bezüglich der Anschlagsfläche (30) vorsteht und bei an der Anschlagsfläche (30) anliegendem Ausrichtelement (14) in dieses hineinragt.

6. Steckverbinder nach einem der vorhergehenden Ansprüche,
dadurch **gekennzeichnet,**
daß die Innenumfangsfläche der Steckaufnahme (32) kreiszylindrisch ausgeführt und die Außenumfangsfläche des in die Steckaufnahme (32) einsteckbaren Endes (34) des Ausrichtelements (14) dazu zumindest im wesentlichen vorzugsweise komplementär ist.

7. Steckverbinder nach einem der Ansprüche 1 bis 5,
dadurch **gekennzeichnet,**
daß die Innenumfangsfläche der Steckaufnahme (32) einen leicht konischen Verlauf mit in Axialrichtung (x) vom Steckteil (16) weg kleiner werdendem Innenquerschnitt besitzt und die Außenumfangsfläche des in die Steckaufnahme (32) einsteckbaren Endes (34) des Ausrichtelements (14) dazu zumindest im wesentlichen vorzugsweise komplementär ist.

8. Steckverbinder nach einem der vorhergehenden Ansprüche,
dadurch **gekennzeichnet,**
daß wenigstens zwei elektrooptische Module (12) mit jeweils wenigstens einer Steckaufnahme (32) in das Aufnahmeteil (18) einsetzbar sind.

9. Steckverbinder nach einem der vorhergehenden Ansprüche,
dadurch **gekennzeichnet,**
daß wenigstens ein elektrooptisches Modul (12) vorgesehen ist, das wenigstens zwei Steckaufnahmen (32) für ein jeweiliges Ausrichtelement (14) umfaßt.

10. Steckverbinder nach Anspruch 1,
dadurch **gekennzeichnet,**
daß das Gegenelement (12) durch ein optisches Terminal oder eine optische Ferrule gebildet ist, die einen in das Ausrichtelement (14) einsteckbaren axialen Ansatz (22) sowie eine quer zur Axialrichtung (x) verlaufende Anschlagsfläche (28) aufweist, die mit der zugewandten Stirnfläche (26) des Ausrichtelements (14) zusammenwirkt.

11. Steckverbinder nach Anspruch 10,
dadurch **gekennzeichnet,**
daß das Aufnahmeteil (18) ein der gegenseitigen Verbindung von optischen Kabeln dienendes In-line-Gehäuse umfaßt, in das ein Einsteckteil (16) einsteckbar ist.

12. Steckverbinder nach einem der vorhergehenden Ansprüche,
dadurch **gekennzeichnet,**
daß der axiale Ansatz (22) wenigstens einer optischen Ferrule (10) eine kreiszylindrische Außenumfangsfläche besitzt und die Innenumfangsfläche des den axialen Ansatz (22) aufnehmenden Endes oder Abschnitts (38) des Ausrichtelements (14) dazu zumindest im wesentlichen vorzugsweise komplementär ist.

13. Steckverbinder nach einem der vorhergehenden Ansprüche,
dadurch **gekennzeichnet,**
daß der axiale Ansatz (22) wenigstens einer optischen Ferrule (10) einen leicht konischen Verlauf mit in Axialrichtung (x) vom Steckteil (16) weg kleiner werdendem Innenquerschnitt besitzt und die Innenumfangsfläche des den axialen Ansatz (22) aufnehmenden Endes oder Abschnitts (38) des Ausrichtelements (14) dazu zumindest im wesentlichen vorzugsweise komplementär ist.

14. Steckverbinder nach einem der vorhergehenden Ansprüche,
dadurch **gekennzeichnet,**
daß das freie Ende des axialen Ansatzes (22) wenigstens einer optischen Ferrule (10) mit einer Abschrägung (40) versehen ist.

15. Steckverbinder nach einem der vorhergehenden Ansprüche,
dadurch **gekennzeichnet,**
daß das Ausrichtelement (14) allgemein rohrstückartig ausgeführt ist

16. Steckverbinder nach einem der vorhergehenden Ansprüche,
dadurch **gekennzeichnet,**
daß das Ausrichtelement (14) mit einem äußeren Ringflansch (42) versehen ist, über den es bezüglich des Aufnahme teils (18) axial fixierbar ist.

17. Steckverbinder nach Anspruch 16,
dadurch **gekennzeichnet,**
daß der Ringflansch (42) in Axialrichtung (x) zwischen den beiden Stirnflächen (24, 26) des Ausrichtelements (14) angeordnet ist.

18. Steckverbinder nach einem der vorhergehenden Ansprüche,
dadurch **gekennzeichnet,**
daß das Ausrichtelement (14) insgesamt starr ausgeführt ist.
